# EUROPEAN PATENT APPLICATION

(11) **EP 4 840 590 A1**
(43) Date of publication of application: **18.11.2026**
(21) Application number: 25196565.3
(22) Date of filing: 19.08.2025
(51) Int. Cl.: B25F 5/00, H05K 9/00

(54) **BATTERY PACK FOR A POWER TOOL**

(30) Priority: 16.05.2025 CN 202510633936; 16.05.2025 CN 202510631937
(71) Applicant: Nanjing Chervon Industry Co., Ltd., Nanjing, Jiangsu 211106 (CN)
(72) Inventor: GENG, Zheng, Nanjing, Jiangsu 211106 (CN); LIU, Xiaopan, Nanjing, Jiangsu 211106 (CN)
(74) Representative: Sun, Yiming

(57) **Abstract**

A battery pack includes a housing; a battery assembly disposed in the housing and formed by connecting multiple battery cells in series or in parallel; a battery management system configured to manage at least the charging and discharging process of the battery assembly; and an electrostatic suppression circuit connected between the battery assembly and the battery management system to prevent static electricity from entering the battery management system. Through the technical solution, the problem of static electricity entering the circuit board of the battery management system of the battery pack can be solved so that the circuit board of the battery management system is less likely to be damaged by static electricity, thereby improving the safety performance and service life of the battery pack.

## Description

### TECHNICAL FIELD

The present application relates to the technical field of batteries and, in particular, to a battery pack for a power tool.

### BACKGROUND

A battery pack in the related art is not protected from static electricity. As a result, when the battery pack is inserted into an electrical device or a charger, the rapid release of static electricity generates destructive voltage and current, making the circuit board of the battery management system on the battery pack easily damaged and damaging the battery pack.

This part provides background information related to the present application, and the background information is not necessarily the existing art.

### SUMMARY

An object of the present application is to solve or at least alleviate part or all of the preceding problems. Therefore, an object of the present application is to provide a battery pack with antistatic properties.

To achieve the preceding object, the present application adopts the technical solutions below.

The present application provides a battery pack for a power tool. The battery pack for a power tool includes a housing, a battery assembly, a battery management system, and an electrostatic suppression circuit. The battery assembly is disposed in the housing and formed by connecting multiple battery cells in series or in parallel. The battery management system is configured to manage at least the charging and discharging process of the battery assembly. The electrostatic suppression circuit is connected between the battery assembly and the battery management system to prevent static electricity from entering the battery management system.

In some examples, the battery management system includes a data acquisition module and a controller, the data acquisition module acquires at least the battery parameters of the battery cells, and the controller is configured to control the charging and discharging of the battery cells.

In some examples, the electrostatic suppression circuit is connected between the battery cells and the data acquisition module.

In some examples, the electrostatic suppression circuit includes electrostatic suppression elements.

In some examples, the electrostatic suppression elements include at least one of magnetic beads, capacitors, and inductors.

In some examples, when the electrostatic suppression elements include magnetic beads, each magnetic bead is connected in series between a respective battery cell and the battery management system.

In some examples, when the electrostatic suppression elements include capacitors, an end of each capacitor is connected between a respective battery cell and the battery management system, and the other end of the capacitor is grounded.

In some examples, the electrostatic suppression circuit is electrically connected to the positive electrodes of the battery cells.

In some examples, the housing contains antistatic material.

In a second aspect, the present application provides a battery pack for a power tool. The battery pack for a power tool includes a housing, a battery assembly, a control board, a battery management system, and multiple magnetic beads. The battery assembly is disposed in the housing and formed by connecting multiple battery cells in series or in parallel. The control board is fixed in the housing and electrically connected to the battery assembly. The battery management system is integrated on the control board and used for detecting the electrical parameter of the battery assembly and managing the charging and discharging process of the battery assembly. The multiple magnetic beads are integrated on the control board, where each of the multiple magnetic beads is connected in series between a respective one of the multiple battery cells and the battery management system to suppress electrostatic interference.

In some examples, an end of the magnetic bead is electrically connected to a positive electrode of the battery cell, and the other end of the magnetic bead is electrically connected to the battery management system.

In some examples, the battery management system includes a data acquisition module and a controller, the data acquisition module acquires at least the battery parameters of the battery cells, and the controller is configured to control the charging and discharging of the battery cells.

In some examples, each magnetic bead is connected between a respective battery cell and the data acquisition module.

In some examples, the battery pack for a power tool further includes multiple electrostatic filter capacitors, where each of the multiple electrostatic filter capacitors is electrically connected between a respective one of the multiple battery cells and the battery management system.

In some examples, the housing contains antistatic material.

In a third aspect, the present application provides a battery pack. The battery pack includes a housing, multiple battery cells, battery terminals, and at least one electrostatic suppression device. The multiple battery cells are disposed in the housing. The battery terminal is configured to be electrically connected to a device terminal of an electrical device. An end of the electrostatic suppression device abuts against the battery terminal, and the other end of the electrostatic suppression device extends to a region where the device terminal mates with the battery terminal. When the battery terminal is connected to the device terminal, the electrostatic suppression device makes contact with the device terminal before the battery terminal does.

In some examples, the battery terminal is configured to be a clip-type terminal, and the electrostatic suppression device abuts against an opening end of the clip-type terminal.

In some examples, the battery pack further includes a terminal block, the terminal block is configured to support the battery terminals, and the electrostatic suppression device is fixedly disposed on the terminal block.

In some examples, the electrostatic suppression device is detachably mounted on the terminal block.

In some examples, the electrostatic suppression device is disposed on the housing.

In some examples, the electrostatic suppression device includes a flexible element.

In some examples, the electrostatic suppression device includes at least one of conductive rubber, conductive foam, conductive plastic, and conductive fabric.

In some examples, the resistance value of the electrostatic suppression device is greater than or equal to 1 kΩ.

In a fourth aspect, the present application provides a battery pack. The battery pack includes a housing, multiple battery cells, battery terminals, a terminal block, and electrostatic suppression devices. The multiple battery cells are disposed in the housing. The battery terminal is configured to be electrically connected to a device terminal of an electrical device. The terminal block is configured to support the battery terminals. The electrostatic suppression devices are configured to suppress static electricity carried by the electrical device during the process of connecting the electrical device to the battery pack. The electrostatic suppression devices are disposed on the terminal block or the housing.

In some examples, the electrostatic suppression device is at least partially disposed in a region where the device terminal mates with the battery terminal.

In some examples, when the battery terminal is connected to the device terminal, the electrostatic suppression device makes contact with the device terminal before the battery terminal does.

In some examples, the battery terminal is configured to be a clip-type terminal, and the electrostatic suppression device is disposed at an opening end of the clip-type terminal and abuts against the opening end of the clip-type terminal.

In some examples, the electrostatic suppression device includes a flexible element.

In some examples, the electrostatic suppression device includes at least one of conductive rubber, conductive foam, conductive plastic, and conductive fabric.

In some examples, the housing contains antistatic material.

The present application has the benefits below. The battery assembly of the battery pack is formed by connecting multiple battery cells in series or in parallel, the battery management system is configured to manage at least the charging and discharging process of the battery assembly, and the electrostatic suppression circuit is connected between the battery assembly and the battery management system to prevent static electricity from entering the battery management system. In this manner, the problem of static electricity entering the circuit board of the battery management system of the battery pack can be solved so that the circuit board of the battery management system is less likely to be damaged by static electricity, thereby improving the safety performance and service life of the battery pack.

### BRIEF DESCRIPTION OF DRAWINGS

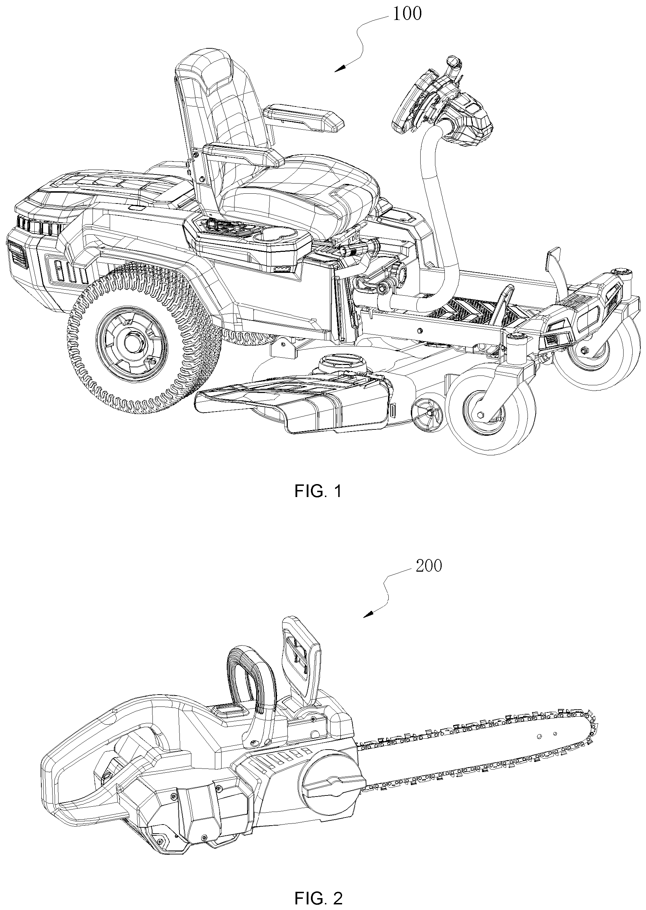

FIG. 1 is a structural view of a manned mower according to an example of the present application.
FIG. 2 is a structural view of a chainsaw according to an example of the present application.

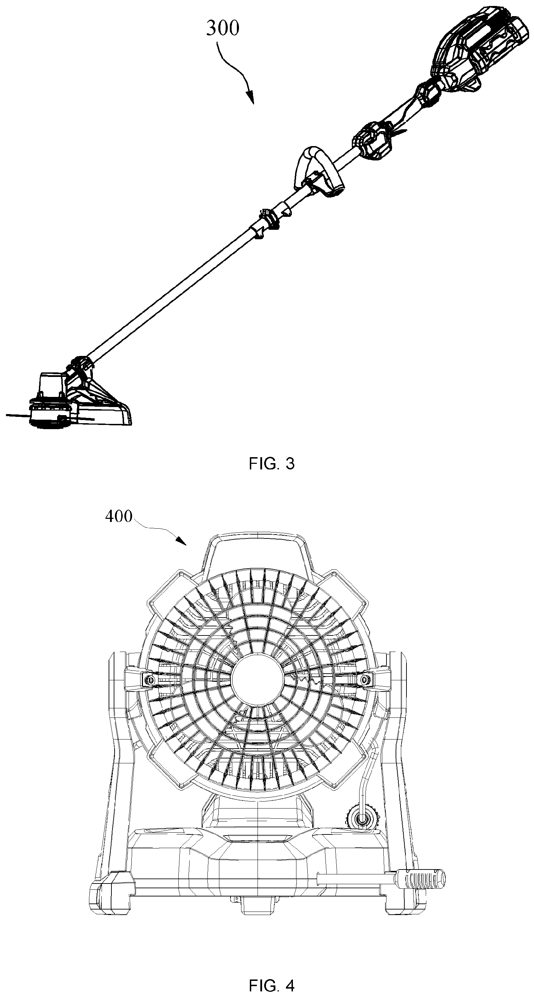

FIG. 3 is a structural view of a handheld string trimmer according to an example of the present application.
FIG. 4 is a structural view of a fan according to an example of the present application.
FIG. 5 is a structural view of a housing of a battery pack according to an example of the present application.
FIG. 6 is a structural diagram of part of a circuit structure of a battery pack according to an example of the present application.
FIG. 7 is a schematic view illustrating some structures of a battery pack according to an example of the present application.
FIG. 8 is a schematic view illustrating some structures of another battery pack according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The power tool provided in the present application may include, but is not limited to, an outdoor work vehicle, such as a farmer's vehicle, a riding mower, or a stand-on mower. In addition, these tools such as a blender may also be used for other purposes. As long as these power tools can adopt the essence of the technical solutions disclosed below, these power tools are within the scope of the present invention.

The battery pack provided in the example of the present application may be used for supplying power to a power tool. The power tool may be a manned mower 100, a chainsaw 200, a handheld string trimmer 300, or other electrical appliances, such as a fan 400. As long as the battery pack adopts the essence of the technical solutions disclosed below, the battery pack is within the scope of the present application.

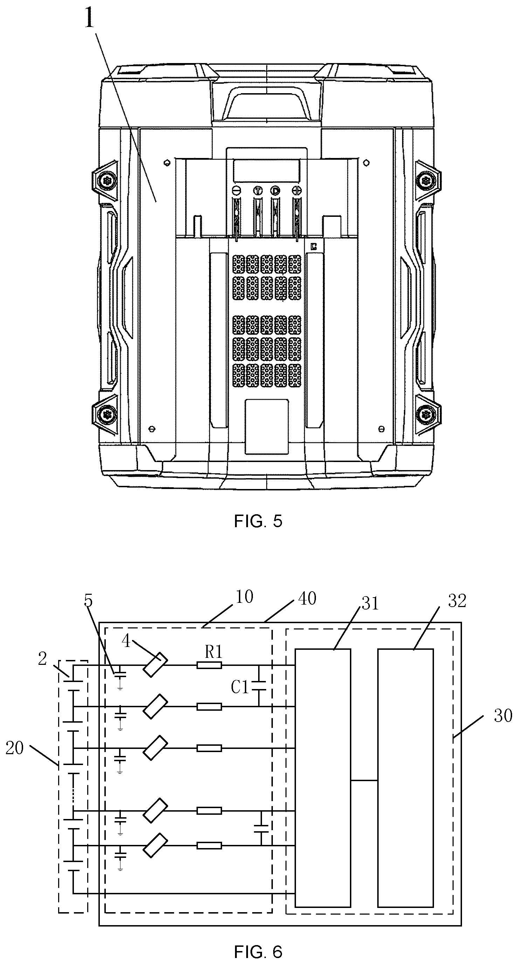

FIG. 5 is a structural view of a housing of a battery pack according to an example of the present application. FIG. 6 is a structural diagram of part of a circuit structure of a battery pack according to an example of the present application. Referring to FIGS. 5 and 6, the battery pack provided in this example includes a housing 1 and a battery assembly 20, and the battery assembly 20 is disposed in the housing 1. The battery assembly 20 is formed by connecting multiple battery cells 2 in series or in parallel. The battery cell 2 may include, but is not limited to, a lithium-ion battery cell, a nickel-metal hydride battery cell, or a lead-acid battery cell. It is to be noted that, in this example, the number of battery cells 2 connected in series or in parallel in the battery assembly 20 is set according to usage requirements and is not specifically limited in this example.

The battery pack further includes a battery management system 30 configured to detect the electrical parameter of the battery assembly 20 and manage the charging and discharging process of the battery assembly 20. The electrical parameters of the battery assembly 20 may include, but are not limited to, the current, voltage, nuclear charge number, and temperature of the battery cells 2. The management of the charging and discharging process of the battery assembly 20 includes at least monitoring the state of the battery assembly 20, balancing the energy between the battery cells 2 when the battery assembly 20 is charged or discharged, and maintaining the state of charge of the battery assembly 20 within a reasonable range to prevent the battery assembly 20 from being damaged by overcharging and over-discharging.

However, due to the presence of static electricity, a large current may exist on the weak current transmission path between the battery assembly 20 and the battery management system 30, and the large current may damage the circuit board of the battery management system 30. To solve the preceding problems, the battery pack provided in this example further includes an electrostatic suppression circuit 10 connected between the battery assembly 20 and the battery management system 30 to suppress the large current caused by static electricity entering the battery management system 30 so that the circuit board of the battery management system 30 is less likely to be damaged by static electricity, thereby improving the safety performance and service life of the battery pack.

The electrostatic suppression circuit 10 may be, but is not limited to, being connected in series between the battery assembly 20 and the battery management system 30; or an end of the electrostatic suppression circuit 10 is connected between the battery assembly 20 and the battery management system 30, and the other end of the electrostatic suppression circuit 10 is grounded, as long as the electrostatic suppression circuit 10 can prevent static electricity from entering the battery management system 30. In this example, the connection manner of the electrostatic suppression circuit 10 between the battery assembly 20 and the battery management system 30 is not specifically limited, as long as the core inventive concept of the present application can be achieved.

In this example, the battery assembly of the battery pack is formed by connecting multiple battery cells in series or in parallel, the battery management system is configured to manage at least the charging and discharging process of the battery assembly, and the electrostatic suppression circuit is connected between the battery assembly and the battery management system to prevent static electricity from entering the battery management system. In this manner, the problem of static electricity entering the circuit board of the battery management system of the battery pack can be solved so that the circuit board of the battery management system is less likely to be damaged by static electricity, thereby improving the safety performance and service life of the battery pack.

In some examples, with continued reference to FIG. 6, the battery management system 30 includes a data acquisition module 31 and a controller 32. The data acquisition module 31 acquires at least the battery parameters of the battery cells 2, and the controller 32 is configured to control the charging and discharging of the battery cells 2.

The battery cells 2 are connected to the controller 32 via the data acquisition module 31. The data acquisition module 31 is used for acquiring the battery parameters of the battery cells 2. The controller 32 controls the charging and discharging of the battery cells 2 according to the battery parameters of the battery cells 2. The battery parameters of the battery cells 2 may include, but are not limited to, parameters such as the current, voltage, nuclear charge number, and temperature of the battery cells 2.

In some examples, each battery cell 2 and the data acquisition module 31 are electrically connected via a resistor R1. The positive electrodes of two adjacent battery cells are connected via a first capacitor C1.

In some examples, the battery management system 30 is integrated on a control board 40, that is, the data acquisition module 31 and the controller 32 are both integrated on the control board 40. The control board 40 is fixed in the housing and electrically connected to the battery assembly 20. The control board 40 refers to a circuit board for circuit control and can control the components in the circuit and acquire and process the electrical parameters of the battery assembly 20.

In some examples, the electrostatic suppression circuit 10 is connected between the battery cells 2 and the data acquisition module 31 to prevent static electricity from entering the data acquisition module 31 and the controller 32, thereby preventing static electricity from entering the battery management system 30.

The data acquisition module 31 may include an analog front-end (AFE) chip configured to convert the acquired analog signals into digital signals and transmit the digital signals to the controller 32 so that the controller 32 manages the charging and discharging of the battery assembly 20.

It is to be noted that the electrostatic suppression circuit 10 may be, but is not limited to, being connected in series between the battery cells 2 and the data acquisition module 31; or an end of the electrostatic suppression circuit 10 is connected between the battery cells 2 and the data acquisition module 31, and the other end of the electrostatic suppression circuit 10 is grounded, as long as the electrostatic suppression circuit 10 can prevent static electricity from entering the data acquisition module 31 and the controller 32.

In some examples, the electrostatic suppression circuit 10 may include at least one electrostatic suppression element for suppressing the large current caused by static electricity between the battery assembly 20 and the battery management system. In some examples, the electrostatic suppression element is connected in series between the battery cell 2 and the battery management system 30. In some examples, an end of the electrostatic suppression element is connected between the battery cell 2 and the battery management system 30, and the other end of the electrostatic suppression element is grounded. In some examples, some electrostatic suppression elements are connected in series between the battery cells 2 and the battery management system 30, and the ends of some electrostatic suppression elements are connected between the battery cells 2 and the battery management system 30, thereby further preventing static electricity from entering the battery management system 30.

In some examples, the electrostatic suppression elements include at least one of magnetic beads 4, capacitors 5, and inductors. The magnetic beads 4, the capacitors 5, and the inductors can dissipate the large current between the battery cells 2 and the battery management system 30, thereby suppressing static electricity. In some examples, with the electrostatic suppression elements, the battery pack can withstand up to 30 kV of static electricity.

In other examples, the electrostatic suppression elements may include other elements capable of suppressing the large current, such as filters. In this example, the types of the electrostatic suppression elements are not specifically limited, as long as the core inventive concept of the present application can be achieved.

In some examples, when the electrostatic suppression elements include the magnetic beads 4, the magnetic beads 4 are connected in series between the battery cells 2 and the battery management system 30.

The magnetic beads 4 are connected in series between the battery cells 2 and the data acquisition module 31, thereby absorbing the electrostatic pulses between the battery cells 2 and the battery management system 30. In some examples, the positive electrodes of the battery cells 2 connected in series are connected to the battery management system 30 via the magnetic beads 4. Since the positive electrodes of the battery cells 2 connected in series are connected to the negative electrodes of the adjacent battery cells 2, static electricity can be suppressed between the battery cells 2 connected in series and the battery management system 30 by electrically connecting an end of the magnetic bead 4 to the positive electrode of the battery cell 2 and electrically connecting the other end of the magnetic bead 4 to the battery management system 30.

In some examples, when the electrostatic suppression elements include the capacitors 5, an end of each capacitor 5 is connected between a respective battery cell 2 and the battery management system 30, and the other end of the capacitor 5 is grounded.

Two ends of the capacitor 5 are connected to the ground electrode and the transmission line between the battery cell 2 and the battery management system 30, respectively so that the high-frequency current between the battery cell 2 and the battery management system 30 can be discharged to the ground electrode, thereby suppressing the electrostatic transmission between the battery cell 2 and the battery management system 30. In some examples, the transmission line between the positive electrode of the battery cell 2 connected in series with other battery cells 2 and the battery management system 30 is grounded through the capacitor 5 so that static electricity can be suppressed between the positive electrodes of the battery cells 2 connected in series and the battery management system 30.

In some examples, with continued reference to FIG. 6, the electrostatic suppression elements include the magnetic beads 4 and the capacitors 5; the magnetic beads 4 are connected in series between the battery cells 2 and the battery management system 30; an end of the capacitor 5 is connected between the battery cell 2 and the battery management system 30, and the other end of the capacitor 5 is grounded, thereby further preventing the large current caused by static electricity from entering the battery management system 30.

In some examples, the electrostatic suppression elements, such as the magnetic beads, are integrated on the control board 40, and each magnetic bead is connected in series between a respective battery cell 2 and the battery management system 30 to suppress electrostatic interference. In this manner, the electrostatic suppression elements can absorb the electrostatic pulses between the battery cells 2 and the battery management system 30 so that the problem of static electricity entering the circuit board and causing damage to the circuit board can be solved, thereby improving the safety performance and service life of the battery pack.

It is to be noted that static electricity exists between the battery assembly 20 of the battery pack and the battery management system 30. Electrostatic discharge may occur when the battery pack is connected to an electrical device, such as a power tool or a charger. To solve the preceding problem, the solutions below may be adopted.

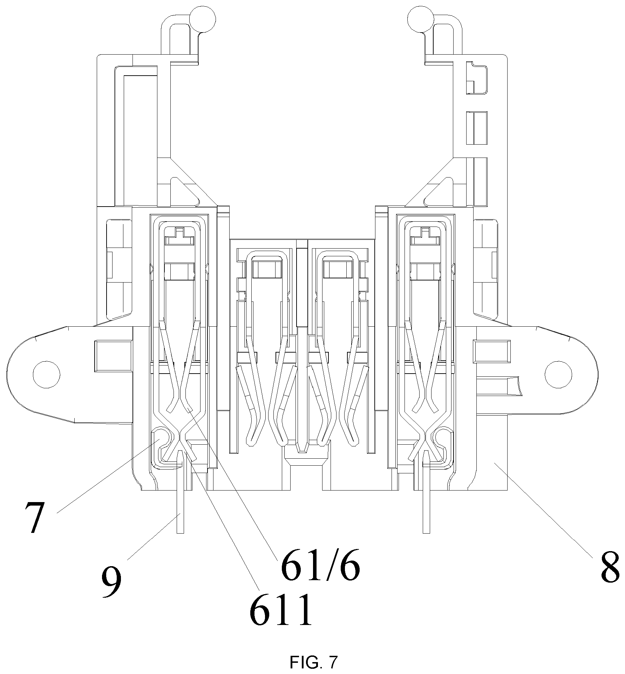

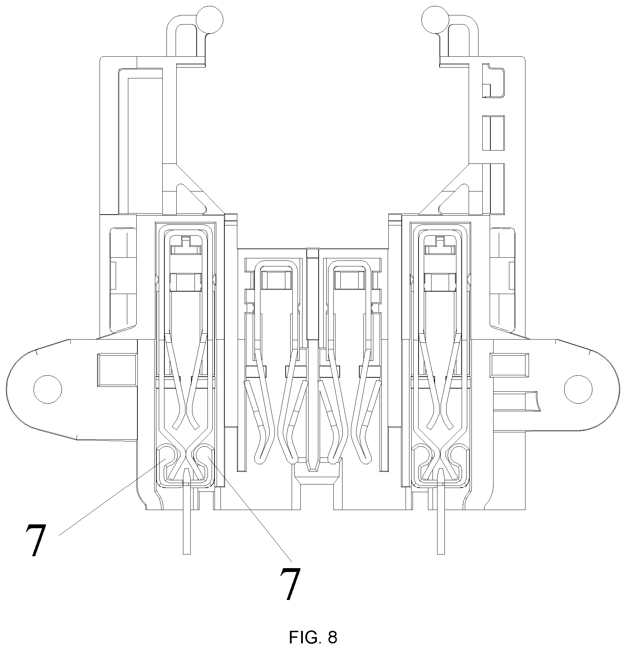

FIG. 7 is a schematic view illustrating some structures of a battery pack according to an example of the present application. FIG. 8 is a schematic view illustrating some structures of another battery pack according to an example of the present application. Referring to FIGS. 5, 7, and 8, the battery pack includes the housing 1, the multiple battery cells 2, and battery terminals 6. The battery cells 2 are disposed in the housing 1. The battery terminal 6 is configured to be electrically connected to a device terminal 9 of an electrical device.

The battery terminal 6 is electrically connected to each battery cell 2 so that each battery cell 2 can be charged or discharged through the battery terminal 6. The electrical device may include, but is not limited to, a power tool or a charger. The electrical device includes device terminals 9 for being electrically connected to the battery terminals 6 of the battery pack and then electrically connected to the battery pack. In some examples, when the battery pack needs to be charged, the electrical device may be a charger, and the battery pack and the charger are electrically connected by inserting the device terminals 9 of the charger into the battery terminals 6 of the battery pack so that the charger can charge the battery pack. In some examples, when the battery pack does not need to be charged, the electrical device may be a power tool, and the power tool and the battery pack are electrically connected by inserting the device terminals 9 of the power tool into the battery terminals 6 of the battery pack so that the battery pack can supply power to the power tool.

In this example, the battery pack further includes at least one electrostatic suppression device 7, an end of the electrostatic suppression device 7 abuts against the battery terminal 6, and the other end of the electrostatic suppression device 7 extends to a region where the device terminal 9 mates with the battery terminal 6 so that when the device terminal 9 is inserted into the battery terminal 6, the device terminal 9 can contact with the electrostatic suppression device 7. In this manner, the electrostatic suppression device 7 can suppress and release the static electricity carried by the electrical device. When the battery terminal 6 is connected to the device terminal 9, the electrostatic suppression device 7 makes contact with the device terminal 9 before the battery terminal 6 does so that the static electricity carried by the electrical device is released through the electrostatic suppression device 7 before the device terminal 9 makes contact with the battery terminal 6. In this manner, the static electricity carried by the electrical device is not transmitted to the battery terminal 6, thereby preventing the static electricity carried by the electrical device from being transmitted to the battery cell 2.

The electrostatic suppression device 7 may be understood as a device capable of suppressing and releasing static electricity, such as an object rich in conductive particles. When the battery pack includes multiple electrostatic suppression devices 7, the electrostatic suppression devices 7 may be in contact with the device terminals 9 at the same time or may make contact with the device terminals 9 in sequence, which is not specifically limited in this example, as long as the core inventive concept of the present application can be achieved.

In this example, the battery terminals of the battery pack are electrically connected to the multiple battery cells, and the battery terminals are configured to be electrically connected to the device terminals of the electrical device. An end of at least one electrostatic suppression device of the battery pack abuts against the battery terminal, and the other end of the at least one electrostatic suppression device extends to a region where the device terminal mates with the battery terminal so that when the device terminal is connected to the battery terminal, the device terminal first makes contact with the electrostatic suppression device and then is connected to the battery terminal so that the static electricity carried by the electrical device is released through the electrostatic suppression device, thereby preventing the static electricity from being transmitted to the battery terminal 6 and then transmitted to the battery cell. In this manner, the battery pack can suppress the static electricity carried by the electrical device, thereby preventing static electricity from entering the battery pack. Therefore, the problem of static electricity entering the circuit board of the battery management system of the battery pack can be solved so that the circuit board of the battery management system is less likely to be damaged by static electricity, thereby improving the safety performance and service life of the battery pack.

In some examples, the battery terminal 6 is configured to be a clip-type terminal 61, and the electrostatic suppression device 7 is disposed at an opening end 611 of the clip-type terminal 61 and abuts against the opening end 611 of the clip-type terminal 61.

When the device terminal 9 is in contact with the battery terminal 6, the opening end 611 of the clip-type terminal 61 is in contact with the device terminal 9, thereby clamping the device terminal 9 to prevent the device terminal 9 from being disconnected from the battery terminal 6. The electrostatic suppression device 7 abuts against the opening end 611 of the clip-type terminal 61 so that when the device terminal 9 is inserted into the clip-type terminal 61, the device terminal 9 can first make contact with the electrostatic suppression device 7, and the device terminal 9 is connected to the clip-type terminal 61 after the static electricity carried by the electrical device is released through the electrostatic suppression device 7, thereby preventing static electricity from entering the battery pack.

In some examples, as shown in FIG. 7, the electrostatic suppression device 7 is disposed on either side of the opening end 611 of the clip-type terminal 61 so that when the device terminal 9 is inserted into the clip-type terminal 61, the device terminal 9 can first make contact with the electrostatic suppression device 7. In some examples, as shown in FIG. 8, two electrostatic suppression devices 7 are disposed on two sides of the opening end 611 of the clip-type terminal 61, respectively so that when the device terminal 9 is inserted into the clip-type terminal 61, the device terminal 9 can first make contact with the two electrostatic suppression devices 7, thereby improving the ability to suppress static electricity and further improving the safety performance and service life of the battery pack.

In some examples, the battery pack further includes a terminal block 8 configured to support the battery terminals 6. The electrostatic suppression device 7 is fixedly disposed on the terminal block 8 so that the position of the electrostatic suppression device 7 is fixed. When the device terminal 9 is inserted into the battery terminal 6, it is ensured that the electrostatic suppression device 7 makes contact with the device terminal 9 before the battery terminal 6 does so that in the process of connecting the electrical device to the battery pack, the electrostatic suppression device can suppress the static electricity carried by the electrical device.

In some examples, the electrostatic suppression device 7 is detachably mounted on the terminal block 8 so that when the static electricity carried by the electrical device needs to be suppressed, the electrostatic suppression device 7 can be mounted at a corresponding position of the terminal block 8. On the contrary, when the static electricity carried by the electrical device does not need to be suppressed, the electrostatic suppression device 7 may be removed from the terminal block 8, thereby improving the flexibility of the electrostatic suppression device 7. Moreover, when the electrostatic suppression device 7 fails due to damage or the like, the failed electrostatic suppression device 7 may be directly replaced with a new electrostatic suppression device 7 so that the electrostatic suppression for the battery pack can continue, thereby saving costs.

In this example, the electrostatic suppression device 7 is not limited to being mounted on the terminal block 8, as long as the electrostatic suppression device can be fixed such that an end of the electrostatic suppression device 7 abuts against the battery terminal 6, the other end of the electrostatic suppression device 7 extends to the region where the device terminal 9 mates with the battery terminal 6, and when the battery terminal 6 is connected to the device terminal 9, the electrostatic suppression device 7 makes contact with the device terminal 9 before the battery terminal 6 does.

In some examples, the electrostatic suppression device 7 is disposed on the housing 1, and the position of the electrostatic suppression device 7 is fixed. In this case, when the device terminal 9 is inserted into the battery terminal 6, it is ensured that the electrostatic suppression device 7 makes contact with the device terminal 9 before the battery terminal 6 does so that in the process of connecting the electrical device to the battery pack, the electrostatic suppression device can suppress the static electricity carried by the electrical device.

In some examples, the electrostatic suppression device 7 includes a flexible element so that when the device terminal 9 is inserted into the battery terminal 6 and the electrostatic suppression device 7 makes contact with the device terminal 9 before the battery terminal 6 does, the electrostatic suppression device 7 can be deformed appropriately without hindering the continued insertion of the device terminal 9, thereby ensuring an effective electrical connection between the device terminal 9 and the battery terminal 6. Moreover, the electrostatic suppression device 7 can be kept in contact with the device terminal 9 to improve the ability to suppress static electricity, thereby further preventing static electricity carried by the electrical device from entering the battery pack.

In some examples, the electrostatic suppression device 7 includes at least one of conductive rubber, conductive foam, conductive plastic, conductive fabric, and an object rich in conductive particles so that the electrostatic suppression device 7 possesses a certain degree of electrical conductivity to release and suppress the static electricity carried by the electrical device.

In some examples, the resistance value of the electrostatic suppression device 7 is greater than or equal to 1 kΩ so that the effect of the electrostatic suppression device 7 in suppressing static electricity carried by the electrical device can be further improved.

The material of the housing 1 has good insulation performance and may be, but is not limited to, plastic, composite material, or the like. In some examples, the housing is featured with high-temperature resistance, aging resistance, flame retardancy, and corrosion resistance. The battery assembly 20, the battery management system 30, and the electrostatic suppression circuit 10 are all disposed in the housing 1 so that the overall structure and safety of the battery pack can be protected, and the effects of the potential impact of the external force, heat, and water ingress on the battery assembly 20, the battery management system 30, and the electrostatic suppression circuit 10 in the battery pack can be mitigated.

In an optional example, the housing 1 contains antistatic material, thereby preventing the battery pack from generating static electricity and causing damage to the battery pack. In some examples, the antistatic material includes at least one of a metal material, a carbon-based material, a conductive polymer material, and an electrostatic shielding material, thereby preventing the battery pack from generating static electricity.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack for a power tool, comprising:
a housing;
a battery assembly disposed in the housing and formed by connecting a plurality of battery cells in series or in parallel;
a battery management system configured to manage at least a charging and discharging process of the battery assembly; and
an electrostatic suppression circuit connected between the battery assembly and the battery management system to prevent static electricity from entering the battery management system.

2. The battery pack for a power tool of claim 1, wherein the battery management system comprises a data acquisition module and a controller, the data acquisition module acquires at least battery parameters of the plurality of battery cells, and the controller is configured to control charging and discharging of the plurality of battery cells.

3. The battery pack for a power tool of claim 2, wherein the electrostatic suppression circuit is connected between the plurality of battery cells and the data acquisition module.

4. The battery pack for a power tool of claim 1, wherein the electrostatic suppression circuit comprises electrostatic suppression elements.

5. The battery pack for a power tool of claim 4, wherein the electrostatic suppression elements comprise at least one of magnetic beads, capacitors, and inductors.

6. The battery pack for a power tool of claim 4, wherein when the electrostatic suppression elements comprise magnetic beads, each of the magnetic beads is connected in series between a respective one of the plurality of battery cells and the battery management system.

7. The battery pack for a power tool of claim 4, wherein when the electrostatic suppression elements comprise capacitors, an end of each capacitor of the capacitors is connected between a respective one of the plurality of battery cells and the battery management system, and another end of each capacitor of the capacitors is grounded.

8. The battery pack for a power tool of claim 1, wherein the electrostatic suppression circuit is electrically connected to positive electrodes of the plurality of battery cells.

9. The battery pack for a power tool of claim 1, wherein the housing contains antistatic material.

10. The battery pack for a power tool of claim 1, further comprising a control board fixed in the housing and electrically connected to the battery assembly, wherein the battery management system is integrated on the control board and used for detecting an electrical parameter of the battery assembly, the electrostatic suppression circuit comprises a plurality of magnetic beads integrated on the control board, and each of the plurality of magnetic beads is connected in series between a respective one of the plurality of battery cells and the battery management system to suppress electrostatic interference.

11. The battery pack for a power tool of claim 10, wherein an end of a magnetic bead of the plurality of magnetic beads is electrically connected to a positive electrode of a battery cell of the plurality of battery cells, and another end of the magnetic bead is electrically connected to the battery management system.

12. The battery pack for a power tool of claim 10, wherein the battery management system comprises a data acquisition module and a controller, the data acquisition module acquires at least battery parameters of the plurality of battery cells, and the controller is configured to control charging and discharging of the plurality of battery cells.

13. The battery pack for a power tool of claim 12, wherein each of the plurality of magnetic beads is connected between a respective one of the plurality of battery cells and the data acquisition module.

14. The battery pack for a power tool of claim 10, further comprising a plurality of electrostatic filter capacitors, wherein each of the plurality of electrostatic filter capacitors is electrically connected between a respective one of the plurality of battery cells and the battery management system.

15. The battery pack for a power tool of claim 10, wherein the housing contains antistatic material.

## Amended claims

### Amended claims in accordance with Rule 137(2) EPC.

1. A battery pack for a power tool, comprising:
a housing (1);
a battery assembly (20) disposed in the housing (1) and formed by connecting a plurality of battery cells (2) in series or in parallel;
a battery management system (30) configured to manage at least a charging and discharging process of the battery assembly (20); and
an electrostatic suppression circuit (10) connected between the battery assembly (20) and the battery management system (30) to prevent static electricity from entering the battery management system (30);
wherein the electrostatic suppression circuit (10) comprises electrostatic suppression elements, the battery management system (30) comprises a data acquisition module (31), each of the electrostatic suppression elements is connected in series on a weak current transmission path between a respective one of the plurality of battery cells (2) and the data acquisition module (31).

2. The battery pack for a power tool of claim 1, wherein the battery management system (30) comprises a controller (32), the data acquisition module (31) acquires at least battery parameters of the plurality of battery cells (2), and the controller (32) is configured to control charging and discharging of the plurality of battery cells (2).

3. The battery pack for a power tool of claim 1, wherein the electrostatic suppression elements comprise at least one of magnetic beads (4), capacitors, and inductors.

4. The battery pack for a power tool of claim 1, wherein when the electrostatic suppression elements comprise magnetic beads (4), each of the magnetic beads (4) is connected in series between the respective one of the plurality of battery cells (2) and the battery management system (30).

5. The battery pack for a power tool of claim 1, wherein when the electrostatic suppression elements further comprise capacitors (5), an end of each capacitor (5) of the capacitors (5) is connected between a respective one of the plurality of battery cells (2) and the battery management system (30), and another end of each capacitor (5) of the capacitors (5) is grounded.

6. The battery pack for a power tool of claim 1, wherein the electrostatic suppression circuit (10) is electrically connected to positive electrodes of the plurality of battery cells (2).

7. The battery pack for a power tool of claim 1, wherein the housing (1) contains antistatic material.

8. The battery pack for a power tool of claim 1, further comprising a control board (40) fixed in the housing (1) and electrically connected to the battery assembly (20), wherein the battery management system (30) is integrated on the control board (40) and used for detecting an electrical parameter of the battery assembly (20), the electrostatic suppression circuit (10) comprises a plurality of magnetic beads (4) integrated on the control board (40), and each of the plurality of magnetic beads (4) is connected in series between a respective one of the plurality of battery cells (2) and the battery management system (30) to suppress electrostatic interference.

9. The battery pack for a power tool of claim 8, wherein an end of a magnetic bead (4) of the plurality of magnetic beads (4) is electrically connected to a positive electrode of a battery cell (2) of the plurality of battery cells (2), and another end of the magnetic bead (4) is electrically connected to the battery management system (30).

10. The battery pack for a power tool of claim 8, wherein the battery management system (30) comprises a controller (32), the data acquisition module (31) acquires at least battery parameters of the plurality of battery cells (2), and the controller (32) is configured to control charging and discharging of the plurality of battery cells (2).

11. The battery pack for a power tool of claim 10, wherein each of the plurality of magnetic beads (4) is connected between the respective one of the plurality of battery cells (2) and the data acquisition module (31).

12. The battery pack for a power tool of claim 8, further comprising a plurality of electrostatic filter capacitors, wherein each of the plurality of electrostatic filter capacitors is electrically connected between a respective one of the plurality of battery cells (2) and the battery management system (30).

13. The battery pack for a power tool of claim 8, wherein the housing (1) contains antistatic material.
